# EUROPÄISCHE PATENTANMELDUNG

(11) **EP 0 924 880 A1**
(43) Veröffentlichungstag der Anmeldung: **23.06.1999**
(21) Anmeldenummer: 97122321.9
(22) Anmeldetag: 17.12.1997
(51) Int. Cl.: H04B 10/00, H04B 10/22

(54) **System zur kabellosen optischen Energie- und Datenübertragung**

(71) Anmelder: SIEMENS AKTIENGESELLSCHAFT, 80333 München (DE)
(72) Erfinder: Haible, Jürgen, 91058 Erlangen (DE)

(57) **Zusammenfassung**

Das Identsystem enthält eine erste Datenverarbeitungsvorrichtung (1) mit ersten Mitteln (22) zur Abstrahlung von Energie und zweiten Mittel (24) zum Empfang von Daten, eine zweite Datenverarbeitungsvorrichtung (3a) mit dritten Mitteln (33) zur Umwandlung der Energie und vierten Mittel (42) zur Abstrahlung von Daten. Die ersten, dritten Mittel bilden einen optoelektronischen Kanal (7) zur kabellosen Energieübertragung. Die vierten, zweiten Mittel bilden einen hochfrequenten Kanal (9) zur kabellosen Datenübertragung von der zweiten zur ersten Datenverarbeitungsvorrichtung.

## Beschreibung

Die Erfindung betrifft ein Identsystem zur Übertragung, Verarbeitung und Speicherung von Daten. Dieses System enthält zumindest eine erste und eine zweite Datenverarbeitungseinheit. Dabei enthält die erste Datenverarbeitungseinheit zumindest erste Mittel zur kabellosen Abstrahlung von Energie, und zweite Mittel zum kabellosen Empfang von Daten. Die zweite Datenverarbeitungsvorrichtung enthält zumindest dritte Mittel zur Umwandlung der von den ersten Mitteln der ersten Datenverarbeitungsvorrichtung kabellos abgestrahlten Energie in elektrische Versorgungsenergie, und vierte Mittel zur kabellosen Abstrahlung von Daten an die zweiten Mittel der ersten Datenverarbeitungsvorrichtung.

Bei einer praktischen Anwendung kann es sich bei der ersten Datenverarbeitungsvorrichtung z.B. um ein sogenanntes Schreib- und Lesegerät handeln. Ferner kann es sich bei einer praktischen Ausführung bei der zweiten Datenverarbeitungsvorrichtung z.B. um einen sogenannten mobilen Datenträger handeln. Eine derartige beispielhafte Anordnung kann als ein Identsystem gezeichnet werden. Dabei werden durch ein u.U. zentrales Schreib- und Lesegerät berührungslos Daten von einem ausgewählten mobilen Datenträger ausgelesen. Dieser Datenträger kann sich in einer Gruppe von Datenträgern befinden. Gegebenenfalls können auch Daten berührungslos in einen oder mehrere mobile Datenträger eingeschrieben werden. Der oder die Datenträger müssen dabei zumindest für die Dauer einer Daten abrufenden, d.h. lesenden, bzw. zumindest für die Dauer einer Daten einspeichernden, d.h. schreibenden, Datenübertragung mit elektrischer Versorgungsenergie gespeist werden. Dabei sollen separate, energiespeichernde Elemente in den mobilen Datenträgern, wie z.B. Batterien, vermeiden werden. Statt dessen soll auch die benötige elektrische Versorgungsenergie berührungslos übertragen werden.

In der Praxis kann zur kabellosen Übertragung von Energie und Daten unterschieden werden zwischen sogenannten induktiven Identsystemen, RF- Identsystemen und optischen Identsystemen. Dabei müssen jeweils grundsätzlich unterschiedliche Arten von elektrischen Bauteilen für die kabellose Abstrahlung und den Empfang von Daten und Energie eingesetzt werden.

Bei induktiven Identsystemen werden zur kabellosen Übertragung niedrige Frequenzen eingesetzt. Dabei treten im Übertragungsbereich große elektromagnetische Wellenlängen auf, wobei eine rein induktive magnetische Kopplung im magnetischen Nahfeld erfolgt. Zur Abstrahlung bzw. dem Empfang werden Leiterschleifen bzw. Wicklungen eingesetzt. Bei der Übertragung sind Grenzwerte bezüglich der maximalen Feldstärke bei der induktiven Kopplung einzuhalten. Teilweise werden bei induktiven Identsystemen für die Daten- und Energieübertragung unterschiedliche Frequenzen aus demjenigen Wellenlängenbereich verwendet, bei dem die induktive Kopplung auftritt. Zur Daten- und Energieübertragung dienen Leiterschleifen.

Induktive Identsysteme weisen zum einen den Nachteil auf, daß die induktive Kopplung mit der Entfernung zwischen einer ersten Datenverarbeitungsvorrichtung, welche meist in Form eines sogenannten Schreib- und Lesegerätes ausgebildet ist, und einer zweiten Datenverarbeitungsvorrichtung, welche meist in Form eines mobilen Datenträgers ausgebildet ist, stark abnimmt. Auf Grund der Begrenzung der maximalen Feldstärke ist die Reichweite eines derartigen Systems stark eingeschränkt. Zudem kann die induktive Kopplung erheblich durch metallische Gegenstände gestört werden.

Bei RF Identsystemen, auch 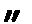 Radio Frequency-" oder Hochfrequenz-Identsysteme genannt, werden zur kabellosen Übertragung hohe Frequenzen bzw. Mikrowellen eingesetzt. Dabei tritt im Übertragungsbereich ein elektromagnetisches Fernfeld mit Wellenausbreitung auf. Zur Abstrahlung bzw. dem Empfang werden elektrische Antennen, insbesondere Dipole, eingesetzt. Bei der Übertragung sind Grenzwerte bezüglich der im elektromagnetischen Fernfeld auftretenden maximalen äquivalenten Strahlungsleistung einzuhalten. Bei einem RF-Identsystem wird jeweils eine im "radio frequency" Bereich liegende Frequenz zur Datenübertragung und eine andere, ebenfalls im "radio frequency" Bereich liegende Frequenz zur Energieübertragung verwendet. Zur Daten- und zur Energieübertragung werden elektrische Antennen eingesetzt.

Bei Hochfrequenz-Identsystemen tritt der Nachteil auf, daß in der zweiten Datenverarbeitungsvorrichtung, welche meist in Form eines mobilen Datenträgers ausgebildet ist, bereits ab einer geringen Reichweite von etwa 50cm eine Batterie eingesetzt werden muß. Diese ist erforderlich, da die maximal zulässige Feldstärke der ersten Datenverarbeitungsvorrichtung, welche meist in Form eines sogenannten Schreib- und Lesegerätes ausgebildet ist, nicht mehr zur Versorgung eines Datenträgers aus dem elektromagnetischen Hochfrequenzfeld ausreicht. Bei Hochfrequenz-Identsystemen tritt als weiterer Nachteil auf, daß eine sogenannte Vereinzelung von Datenträgern, d.h. ein gezieltes Aktivieren eines einzelnen, ausgewählten Datenträgers aus einer Gruppe von Datenträgern durch ein Schreib- und Lesegerät, ist nur schwer möglich ist.

Schließlich wird bei optischen Identsystemen zur kabellosen Übertragung sichtbares Licht bzw. Infrarotlicht eingesetzt. Dabei treten im Übertragungsbereich Wellenlängen auf, die im Nanometerbereich liegen. Zur Abstrahlung bzw. dem Empfang werden optoelektronische bzw. photoelektrische Bauelemente eingesetzt, z.B. Leucht- und Photodioden bzw. Laser. Bei der Übertragung sind Grenzwerte z.B. bezüglich der Laserschutzklassen einzuhalten. Bei einem optischen Identsystem wird sichtbares Licht zur Energieübertragung und infrarotes Licht zur Datenübertragung eingesetzt. Zur Daten- und Energieübertragung werden optoelektronische Bauelemente benötigt.

Auch bei optischen Identsystemen würde der Nachteil auftreten, daß in der zweiten Datenverarbeitungsvorrichtung, welche meist in Form eines mobilen Datenträgers ausgebildet ist, eine Batterie eingesetzt werden müßte, falls das optische Identsystem nicht exakt ausrichtbar ist und eine etwa 50 cm überschreitende Reichweite aufweisen soll. Dies hat seine Ursache darin, daß die in der Regel zum Energieempfang dienende Solarzelle im mobilen Datenträger nur eine begrenzte Größe und damit eine begrenzte Leistung aufweist. Die hiervon gelieferte Energie ist in der Praxis nicht ausreichend, um optoelektronische Bauelemente, z.B. mehrere Leuchtdioden, zu versorgen, die eine Datenübertragung mit einem ausreichend großen Abstrahlungswinkel ermöglichen.

Der Erfindung liegt die Aufgabe zu Grunde, ein Identsystem anzugeben, welches trotz Verzicht auf energiespeichernde Elemente, wie z.B. Batterien, eine größere Reichweite aufweist, als herkömmliche Identsysteme.

Die Aufgabe wird gemäß dem kennzeichnenden Teil von Anspruch 1 gelöst mit einem Identsystem, bei dem die ersten Mittel der ersten Datenverarbeitungsvorrichtung und die dritten Mittel der zweiten Datenverarbeitungsvorrichtung so ausgebildet sind, daß ein optoelektronischer Kanal zur kabellosen Energieübertragung vorliegt, und die vierten Mittel der zweiten Datenverarbeitungsvorrichtung und die zweiten Mittel der ersten Datenverarbeitungsvorrichtung so ausgebildet sind, daß ein erster hochfrequenter, elektromagnetischer Kanal zur kabellosen Datenübertragung von der zweiten zur ersten Datenverarbeitungsvorrichtung vorliegt.

Die Erfindung beruht darauf, daß für die Energieübertragung und die Datenübertragung so unterschiedliche Wellenlängenbereiche benutzt werden, daß die Übertragung auf unterschiedlichen physikalischen Prinzipen beruht. Erfindungsgemäß wird für die Energieübertragung ein optoelektronischer Kanal und für die Datenübertragung in wenigstens einer Übertragungsrichtung ein hochfrequenter, elektromagnetischer Kanal eingesetzt. Bevorzugt kann sichtbares Licht im optoelektronischen Kanal für die Energieübertragung eingesetzt werden.

Dies hat den Vorteil, daß die Reichweite des Identsystems gemäß der Erfindung im Vergleich zu herkömmlichen Identsystemen gesteigert werden kann, ohne daß zum einen die jeweiligen Kanäle betreffende, maximale Grenzwerte überschritten werden, und ohne daß zum anderen energiespeichernde Elemente in der insbesondere als mobiler Datenträger dienenden zweiten Datenverarbeitungsvorrichtung notwendig sind.

Ein weiterer Vorteil des erfindungsgemäßen Identsystems besteht darin, daß keine wechselseitigen Beeinflussung zwischen dem optoelektronischen Kanal für die Energieübertragung und dem hochfrequenten Kanal für die Datenübertragung auftreten. In der ersten und zweiten Datenverarbeitungsvorrichtung sind somit keine aufwendigen Filterschaltungen notwendig.

Schließlich tritt der weitere Vorteil auf, daß über den ersten optoelektronischen Kanal eine schnelle und sichere Vereinzelung eines ausgewählten Datenträgers aus einer Gruppe von Datenträgern möglich ist, während über den zweiten, hochfrequenten, elektromagnetischen Kanal eine Datenübertragung mit einem großen Abstrahlungswinkel erreicht werden kann. Für die Datenübertragung sind somit keine besonderen Fokussierung bzw. wechselseitigen Ausrichtung zwischen den beiden Datenverarbeitungsvorrichtung notwendig.

Weitere, vorteilhafte Ausführungsformen der Erfindung sind in Unteransprüchen enthalten.

Die Erfindung wird desweiteren anhand der in den nachfolgend kurz angeführten Figuren dargestellten Ausführungsbeispiele weiter erläutert. Dabei zeigt
- FIG 1: das Blockschaltbild eines Identsystems gemäß der Erfindung, welches beispielhaft als ein sogenanntes "read-only" Identsystem ausgebildet ist,
- FIG 2: eine schematische Darstellung der Wirkungsweise des Identsystems gemäß Figur 1,
- FIG 3: das Blockschaltbild eines Identsystems gemäß der Erfindung, welches als ein sogenanntes "read-write" Identsystem ausgebildet ist, mit einem weiteren hochfrequenten, elektromagnetischen "write" Kanal zur Datenübertragung,
- FIG 4: das Blockschaltbild eines Identsystems gemäß der Erfindung, welches als ein sogenanntes "read-write" Identsystem ausgebildet ist, mit einem weiteren optoelektronischen "write" Kanal zur Datenübertragung,
- FIG 5: eine schematische Darstellung der Wirkungsweise des Identsystems gemäß Figur 3,
- FIG 6: das Prinzipschaltbild für eine beispielhafte Ausführung eines Identsystems gemäß dem Blockschaltbild von Figur 3,
- FIG 7: das Prinzipschaltbild für eine erste beispielhafte Ausführung eines Identsystems gemäß dem Blockschaltbild von Figur 4, und
- FIG 8: das Prinzipschaltbild für eine zweite beispielhafte Ausführung eines Identsystems gemäß dem Blockschaltbild von Figur 4.

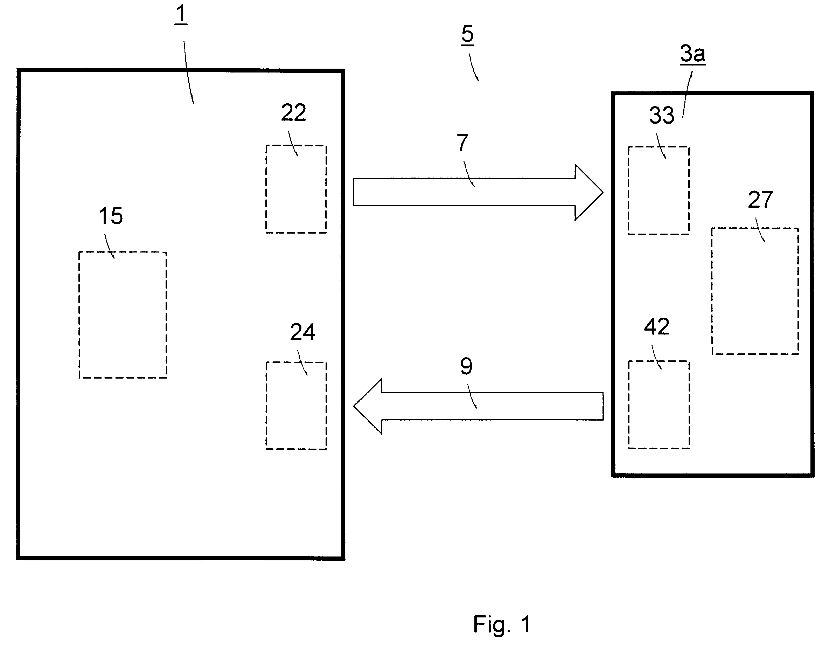

Figur 1 zeigt das Blockschaltbild eines Identsystems gemäß der Erfindung, welches beispielhaft als ein "read-only" Identsystem ausgebildet ist. Dieses kann beispielsweise als ein sogenanntes 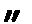 einfaches read-only" Identsystem ausgeführt sein, welches bei einer Anstrahlung über den zur kabellosen Energieübertragung dienenden optoelektronischen Kanal selbsttätig eine Datenabsendung auslöst. Die erste Datenverarbeitungsvorrichtung 1 verfügt dabei über eine interne Vorrichtung zur Datenverarbeitung. Diese steuert alle Abläufe und ist symbolisch ohne weitere Anschlüsse als Block 15 in Figur 1 eingezeichnet. Die erste Datenverarbeitungsvorrichtung 1 weist ferner erste Mittel 22 zur kabellosen Energieabstrahlung auf. Diese generieren einen optoelektronischen Kanal 7 zur kabellosen Energieübertragung von der ersten zur einer zweiten Datenverarbeitungsvorrichtung 3a. Schließlich sind zweite Mittel 24 zum kabellosen Empfang von Daten vorhanden. Die zweite Datenverarbeitungsvorrichtung 3a verfügt ebenfalls über eine interne Vorrichtung zur Datenverarbeitung und gegebenenfalls Datenspeicherung. Diese steuert alle Abläufe und ist symbolisch ohne weitere Anschlüsse als Block 27 in Figur 1 eingezeichnet. Die zweite Datenverarbeitungsvorrichtung 3a weist ferner dritte Mittel 33 zur Umwandlung der von den ersten Mitteln 22 der ersten Datenverarbeitungsvorrichtung 1 über den optoelektronischen Kanal 7 kabellos abgestrahlten Energie in elektrische Versorgungsenergie auf. Hierüber können alle elektrischen Betriebsmittel in der zweiten Datenverarbeitungsvorrichtung 3a direkt mit Energie versorgt werden. Es sind insbesondere keine zusätzlichen Batterien zur Speicherung von Versorgungsenergie notwendig. Schließlich sind vierte Mittel 24 zur kabellosen Abstrahlung von Daten vorhanden. Diese generieren einen ersten hochfrequenten, elektromagnetischen Kanal 9 zur kabellosen Datenübertragung von der zweiten Datenverarbeitungsvorrichtung 3a zu den zweiten Mitteln 24 der ersten Datenverarbeitungsvorrichtung 1.

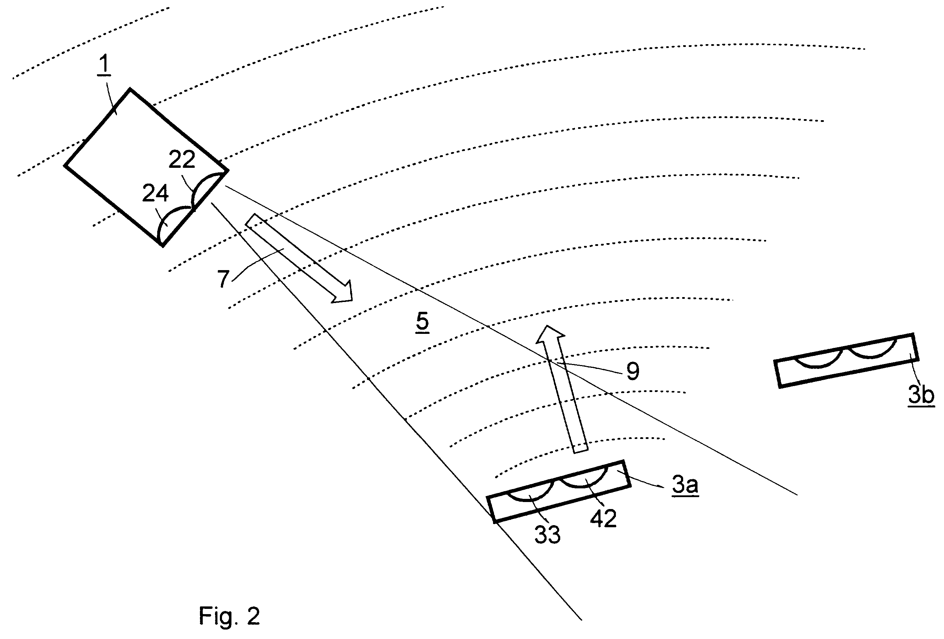

Das Identsystem von Figur 1 stellt ein sogenanntes "read-only" Identsystem dar. Dabei ist in der Praxis die ersten Datenverarbeitungsvorrichtung 1 bevorzugt als eine sogenannte "Leseeinrichtung" und die zweite Datenverarbeitungsvorrichtung 3a als ein insbesondere mobiler Datenträger ausgebildet. Zum Aufbau einer Datenkommunikation zwischen den Datenverarbeitungsvorrichtungen wird zunächst die zweite Datenverarbeitungsvorrichtung 3a durch Aufbau des Kanals 7 zur optoelektronischen Energieübertragung aktiviert. Als Reaktion darauf wird der erste Kanal 9 zur hochfrequenten, elektromagnetischen Datenübertragung von der zweiten Datenverarbeitungsvorrichtung 3a aufgebaut. Insbesondere durch Vermittlung von deren interner Datenverarbeitungs- und speichereinheit 37 werden dann die jeweiligen Dateninhalte über den ersten Kanal 9 an die "Leseeinrichtung" 1 zur weiteren Verarbeitung übergeben. Bei derart aufgebauten Identsystemen können eine größere bis sehr große Anzahl an zweiten Datenverarbeitungsvorrichtungen vorhanden sein. Diese sind beispielhaft in Form von Datenträgern mobil verteilt. Die Aktivierung eines bestimmten, ausgewählten Datenträgers aus dieser Gruppe, d.h. dessen Vereinzelung, wird in vorteilhafter Weise durch einen gezielten und u.U. fokussierten Aufbau des optoelektronischen Kanals 7 begünstigt. Auf Grund der dabei erfolgten Energieübertragung ist dieser nun "sendefähig", baut den ersten hochfrequenten, elektromagnetischen Kanal 9 auf und überträgt ausgewählte Daten zurück. Da auf Grund der vorangegangenen Vereinzelung keine anderen Datenträger der Gruppe "sendefähig" sind, ist eine besondere räumliche Ausrichtung des Kanals 9 auf die "Leseeinrichtung" 1 nicht erforderlich. Dies wird am Beispiel der Figur 2 noch näher erläutert.

Figur 2 zeigt eine schematische Darstellung der Wirkungsweise eines Identsystems gemäß der Figur 1 in der Art einer räumlichen Draufsicht. Dabei ist die räumliche Ausbreitung der einzelnen, kabellosen Übertragungskanäle 5 symbolisch visualiert. Dabei kommuniziert beispielsweise eine als Lesegerät ausgebildete erste Datenverarbeitungsvorrichtung 1 mit einer als Datenträger ausgebildeten zweiten Datenverarbeitungsvorrichtung 3a. Das beispielhafte Identsystem enthält mehrere Elemente, welche dem Typ einer zweiten Datenverarbeitungsvorrichtung entsprechen. In Figur 2 sind hierzu beispielhaft 2 derartige, als mobile Datenträger ausgebildete Elemente 3a und 3b dargestellt. Zum Aufbau einer Datenkommunikation wird zunächst über die ersten Mittel 22 des Lesegerätes 1 ein Kanal 7 zur optoelektronischen Energieübertragung aufgebaut. Dieser kann praktisch in Form eines Lichtstrahles z.B. aus gebündeltem sichtbaren Licht oder aus Laserlicht bestehen. Im Beispiel der Figur 2 ist mit geraden Linien ein Lichtkegel dagestellt. Hiermit kann ein gewünschter Datenträger, im Beispiel der Datenträger 3a, gezielt angestrahlt werden. Dieser wird hierdurch vereinzelt, so daß weitere Datenträger, so auch der beispielhafte Datenträger 3b, passiv bleiben. Über die dritten Mittel 33 erfolgt nun die Energieversorgung des vereinzelten Datenträgers 3a. Dieser kann nun über die dritten Mittel 33 Daten absenden. Hierzu wird ein Kanal 9 zur hochfrequenten, elektromagnetischen Datenübertragung aufgebaut, welcher im Beispiel der Figur 2 in strichlierter Linie in Form eines gekrümmten Strahlungsfeldes symbolisch dargestellt ist. Dieses Strahlungsfeld erreicht die zweiten Mitteln 24 des Lesegerätes 1, worüber die darin enthaltenen Daten zur Weiterverarbeitung empfangen werden.

Aus der Darstellung von Figur 2 ist ersichtlich, daß sowohl eine Vereinzelung als auch eine Datenkommunikation zwischen beiden Datenverarbeitungsvorrichtungen möglich ist, ohne daß diese in besonderer Weise räumlich aufeinander ausgerichtet sein müssen. Ferner kann deren Abstand erheblich größer sein, als bei herkömmlichen Systemen. Es können problemlos große Reichweiten erzielt werden, ohne daß sowohl bezüglich des optoelektronischen Energieübertragungskanals als auch bezüglich des hochfrequenten, elektromagnetischen Datenübertragungskanales zulässige Grenzwerte überschritten werden.

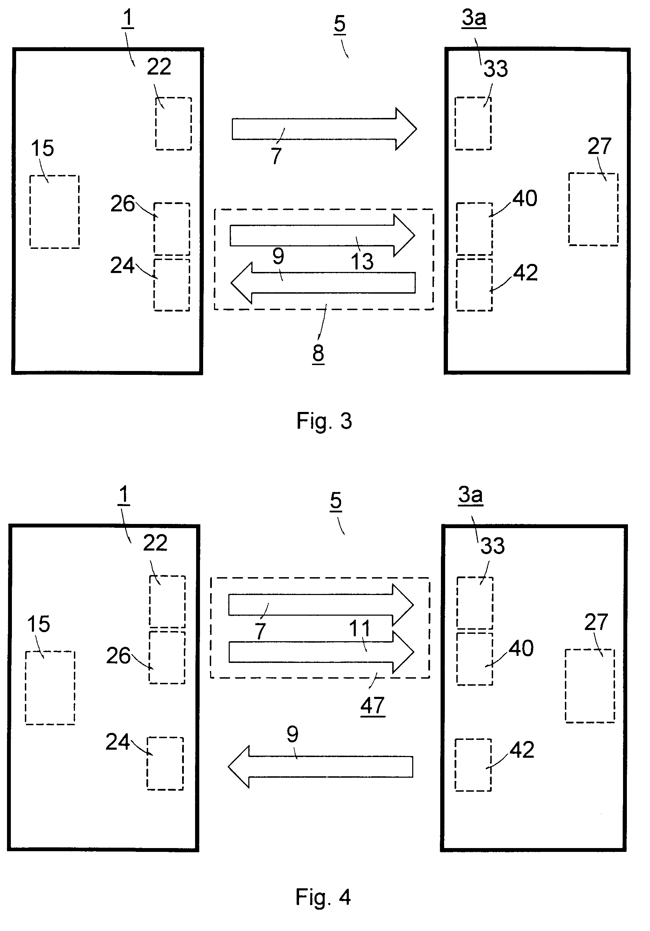

Figur 3 und 4 zeigen Blockschaltbilder von zwei weiteren Ausführungen von Identsystemen gemäß der Erfindung, welche als sogenannte "read" und 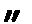 write" Identsysteme ausgebildet sind.

Deren kabellose Übertragungskanäle 5 enthalten jeweils einen weiteren Kanal zur Datenübertragung von der ersten zur zweiten Datenverarbeitungsvorrichtung. Es handelt sich dabei um einen sogenannten "write" Kanal, worüber Daten auch in die zweite Datenverarbeitungsvorrichtung eingeschrieben werden können. In solchen Fällen kann die erste Datenverarbeitungsvorrichtung als ein sogenanntes 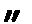 Schreib- und Lesegerät" ausgeführt sein, worüber Daten nicht nur von einer als Datenträger ausgeführten zweiten Datenverarbeitungsvorrichtung abgerufen, sondern auch in eine solche eingeschrieben werden können. Entsprechend den Darstellungen in den Figuren 3 und 4 enthält die erste Datenverarbeitungsvorrichtung 1 eines derartiges Identsystems hierzu fünfte Mittel 26 zur kabellosen Abstrahlung von Daten. Ferner enthält die zweite Datenverarbeitungsvorrichtung 3a sechste Mittel 40 zum kabellosen Empfang von Daten von den fünften Mitteln der ersten Datenverarbeitungsvorrichtung 1.

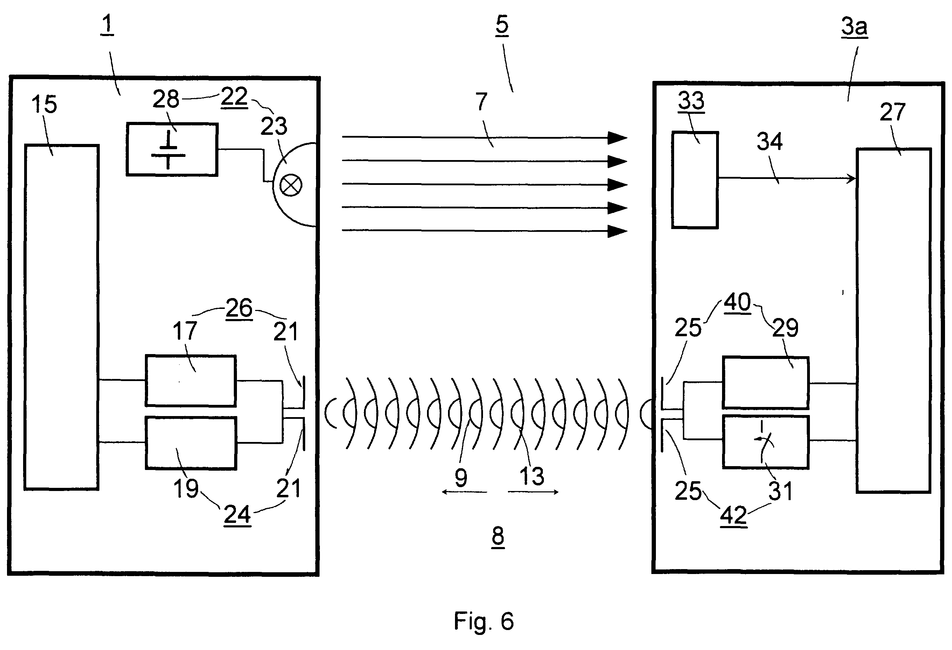

Bei der in Figur 3 dargestellten Ausführungsform sind die fünften Mittel 26 der ersten Datenverarbeitungsvorrichtung 1 und die sechsten Mittel 40 der zweiten Datenverarbeitungsvorrichtung 3a so ausgebildet, daß ein zweiter hochfrequenter, elektromagnetischer Kanal 13 zur kabellosen Datenübertragung von der ersten Datenverarbeitungsvorrichtung 1 zur zweiten Datenverarbeitungsvorrichtung 3a vorliegt. Vorteilhaft bilden dabei der erste hochfrequente, elektromagnetische Kanal 9 und der zweite hochfrequente, elektromagnetische Kanal 13 ein hochfrequentes, elektromagnetisches Kanalbündel 8. Vorteilhaft kann in diesem Kanalbündel 8 der erste hochfrequente, elektromagnetische Kanal 9 durch eine direkte hochfrequente elektromagnetische Abstrahlung und der zweite hochfrequente, elektromagnetische Kanal 13 durch eine auf diese hochfrequente Abstrahlung aufmodulierte elektromagnetische Rückstreuung gebildet werden. Mögliche vorteilhafte, praktische Ausführungen der Mittel 24, 26, 42, 40 werden nachfolgend am Beispiel des Prinzipschaltbildes von Figur 6 noch näher erläutert.

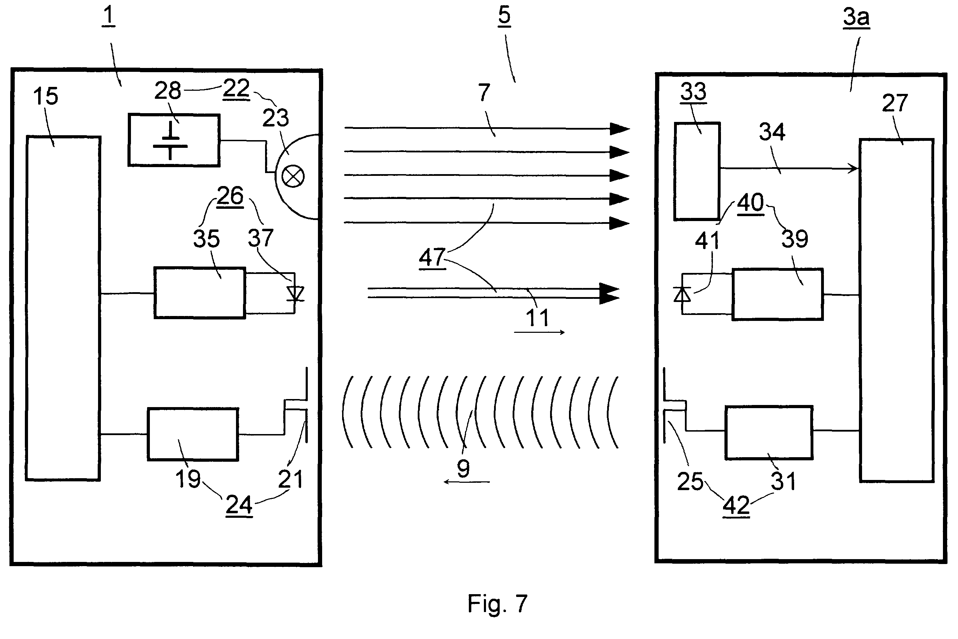

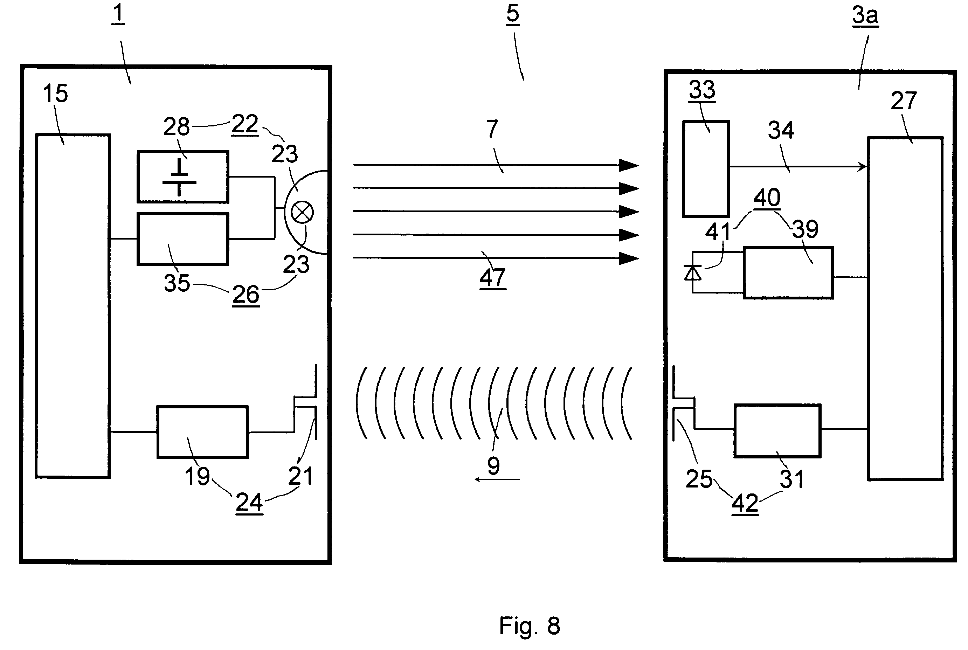

Bei der in Figur 4 dargestellten Ausführungsform sind die fünften Mittel 26 der ersten Datenverarbeitungsvorrichtung 1 und die sechsten Mittel 40 der zweiten Datenverarbeitungsvorrichtung 3a so ausgebildet, daß ein optoelektronischer Kanal 11 zur kabellosen Datenübertragung von der ersten Datenverarbeitungsvorrichtung 1 zur zweiten Datenverarbeitungsvorrichtung 3a vorliegt. Vorteilhaft bilden dabei der optoelektronische Kanal 7 zur kabellosen Energieübertragung und der optoelektronische Kanal 11 zur kabellosen Datenübertragung von der ersten Datenverarbeitungsvorrichtung 1 zur zweiten Datenverarbeitungsvorrichtung 3a ein optoelektronisches Kanalbündel 47. Vorteilhaft kann in diesem Kanalbündel 47 der optoelektronische Kanal 7 zur kabellosen Energieübertragung durch eine gerichtete optoelektronische Abstrahlung und der optoelektronische Kanal 11 zur kabellosen Datenübertragung von der ersten Datenverarbeitungsvorrichtung 1 zur zweiten Datenverarbeitungsvorrichtung 3a durch eine Aufmodulation auf die zur kabellosen Energieübertragung dienende optoelektronische Abstrahlung gebildet werden. Mögliche vorteilhafte, praktische Ausführungen der Mittel 22, 26, 33, 40 werden nachfolgend an den Beispielen der Prinzipschaltbilder von Figur 7 und 8 noch näher erläutert.

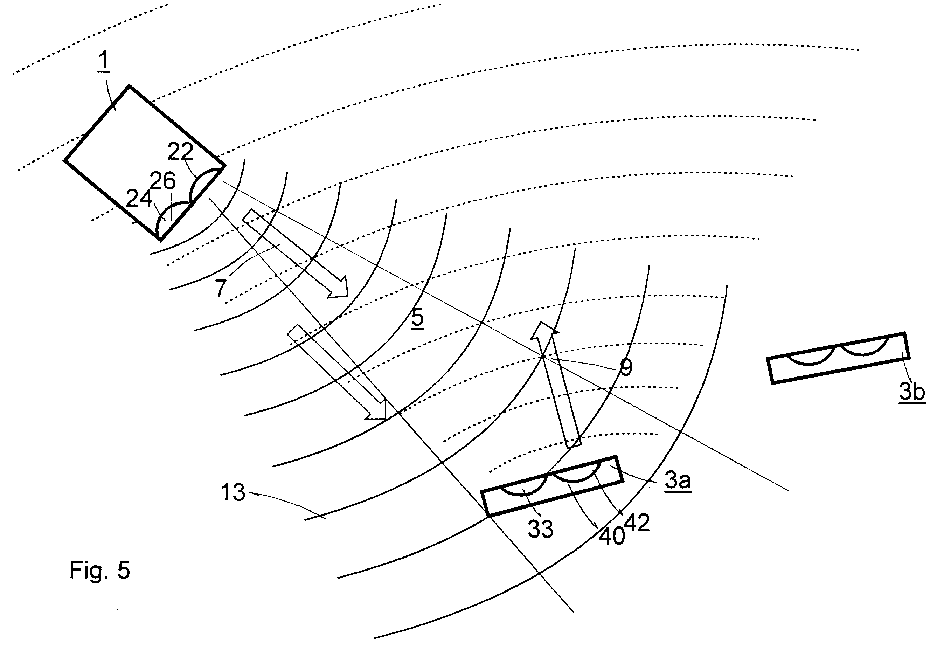

Figur 5 zeigt eine schematische Darstellung der Wirkungsweise eines Identsystems gemäß Figur 3 in der Art einer räumlichen Draufsicht, welche prinzipiell der Darstellung von Figur 2 entspricht. Zum Aufbau einer Datenkommunikation wird zunächst auch hier über die ersten Mittel 22 der bevorzugt als ein Schreib- und Lesegerät ausgeführten ersten Datenverarbeitungsvorrichtung 1 ein bevorzugt gerichteter Kanal 7 zur optoelektronischen Energieübertragung aufgebaut. Dieser kann praktisch in Form eines Lichtstrahles z.B. aus gebündeltem sichtbaren Licht oder aus Laserlicht bestehen. Auch im Beispiel der Figur 5 sind mit geraden Linien die Begrenzungen eines Lichtkegels dagestellt. Hiermit kann eine gewünschte zweite Datenverarbeitungsvorrichtung, welche bevorzugt als ein mobiler Datenträger ausgebildet ist, im Beispiel der Datenträger 3a, gezielt angestrahlt werden. Dieser wird hierdurch vereinzelt, so daß mögliche weitere Datenträger, so auch der beispielhafte Datenträger 3b, passiv bleiben. Über die dritten Mittel 33 erfolgt nun die Energieversorgung des vereinzelten Datenträgers 3a. Dieser ist nun betriebsbereit.

Zu Beginn einer Datenkommunikation kann z.B. das Schreib- und Lesegeräte 1 über deren fünfte Mittel 26 zunächst einen hochfrequenten, elektromagnetischen Kanal 13 aufbauen, welcher zur Übertragung von Daten an die sechsten Mittel 40 des Datenträgers 3a dient. In Figur 5 ist der Kanal 13 symbolisch in Form eines mit geraden Linien ausgeführten, gekrümmten Strahlungsfeldes dargestellt. Die dabei übertragenen Daten ( 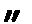 write") können beispielsweise zur Initialisierung des Datenträgers dienen, wodurch dieser zur Rückübertragung ( 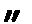 read") von ausgewählten Daten veranlaßt werden kann. Hierzu wird ein weiterer Kanal 9 zur hochfrequenten, elektromagnetischen Datenübertragung aufgebaut, welcher im Beispiel der Figur 5 in strichlierter Linie in Form eines weiteren, gekrümmten Strahlungsfeldes symbolisch dargestellt ist. Die Daten werden vom Datenträger 3a über die dritten Mittel 33 in das Strahlungsfeld 9 eingespeist. Dieses erreicht wiederum die zweiten Mittel 24 des Schreib- und Lesegerätes 1, worüber die im Strahlungsfeld enthaltenen Daten zur Weiterverarbeitung empfangen werden.

Aufgrund der einleitenden Vereinzelung des Datenträgers 3a mittels des ersten, optoelektronischen Energieübertragungskanales 7 ist es nicht erforderlich, daß der von der ersten zur zweiten Datenverarbeitungsvorrichtung verlaufende hochfrequente, elektromagnetische Kanal 13 in einer besonderen Weise fokussiert oder räumlich auf den Datenträger 3a ausgerichtet ist. Auch wenn dessen Strahlungsfeld einen weiteren Datenträger erreichen sollte, in Figur 5 beispielsweise den Datenträger 3b, bleibt dieser passiv. Eine Fehlaktivierung von unerwünschten Datenträgern tritt somit weniger häufig auf.

Figur 6 zeigt das Prinzipschaltbild für eine erste beispielhafte Ausführung eines Identsystems gemäß dem Blockschaltbild von Figur 3. Wie bereits dabei erläutert, werden in diesem Beispiel im Bereich 5 zwischen den beiden Datenverarbeitungsvorrichtungen zwei kabellose Übertragungskanäle aufgebaut. Der erste, zur optoelektronischen Energieübertragung von der ersten Datenverarbeitungsvorrichtung zur zweiten Datenverarbeitungsvorrichtung dienende Kanal 7 wird generiert von ersten Mitteln 22 zur kabellosen Abstrahlung von Energie. Im Beispiel der Figur 6 enthalten diese eine elektrische Energiequelle 28, welche z.B. in Form eines Netzteiles ausgeführt sein kann. Hierüber wird eine elektrische Energiequelle 23 gespeist, welche z.B. in Form einer Glühlampe oder eines Laserstrahles ausgeführt sein kann. Zur Fokussierung des Lichtkegels einer Glühlampe kann ein Reflektor vorhanden sein. Die Abstrahlung wird von dritten Mitteln 33 in der zweiten Datenverarbeitungsvorrichtung entgegengenommen und in elektrische Versorgungsenergie umgewandelt. Diese dritten Mittel 33 können eine Solarzelle enthalten, über deren Ausgangsleitung 34 die elektrischen Betriebsmittel einer insbesondere als ein mobiler Datenträger ausgeführten zweiten Datenverarbeitungsvorrichtung mit elektrischer Energie versorgt werden. Als Betriebsmittel sind insbesondere vorhanden eine interne Datenspeicher- und Verarbeitungseinheit 27, die vierten Mittel 42 zur hochfrequenten kabellosen Datenabstrahlung und gegebenenfalls zusätzlich vorhandene sechste Mittel 40 zum hochfrequenten kabellosen Datenempfang.

Die vierten Mittel 42 enthalten eine bevorzugt in Form eines schaltungstechnisch einfach ausführbaren Modulators ausgebildete Sendeeinrichtung 31. Dieser werden die abzustrahlenden Daten von der internen Datenspeicher- und Verarbeitungseinheit 27 zugeführt, und in modulierte Hochfrequenzsignale zur Abstrahlung über eine Hochfrequenzantenne 25 umgewandelt, z.B. eine Dipolantenne. Der hochfrequente Datenabstrahlungskanal ist im Beispiel der Figur 6 mittels eines Richtungspfeiles 9 dargestellt. Dessen Abstrahlung wird in der bevorzugt zumindest als eine Leseeinrichtung ausgeführten ersten Datenverarbeitungsvorrichtung 1 über dortige zweite Mittel 24 zum Datenempfang entgegengenommen. Diese enthalten wiederum bevorzugt eine Hochfrequenzantenne 21, welche die Strahlung einer angeschlossenen hochfrequenten Empfangseinrichtung 19 zu Demodulation zuführt. Die rekonstruierten Daten können dann der internen Verarbeitungseinheit 15 zugeführt werden.

Für den Fall, daß die erste Datenverarbeitungsvorrichtung entsprechend dem Beispiel von Figur 6 als eine Schreib- und Lesevorrichtung ausgeführt ist, sind zusätzliche, fünfte Mittel 26 zur hochfrequenten Datenabstrahlung vorhanden. Diese weisen bevorzugt eine hochfrequente Sendeeinrichtung 17 zur Umsetzung von Daten auf, welche von der Datenverarbeitungseinheit 15 für den mobilen Datenträger 3a vorgesehen sind. Die Datenabstrahlung in Richtung zum Datenträger 3a erfolgt wiederum über die Hochfrequenzantenne 21. Der hierdurch entstehende hochfrequente Datenübertragungskanal ist im Beispiel der Figur 6 mittels eines Richtungspfeiles 13 dargestellt. Die Abstrahlung wird wiederum von der Hochfrequenzantenne 25 im mobilen Datenträger entgegengenommen und einer weiteren Datenempfangseinrichtung 29 zur hochfrequenten Demodulation zugeführt. Vorteilhaft sind die beiden hochfrequenten Kanäle zur Datenübertragung in Form eines Kanalbündels 8 ausgeführt, in dem z.B. die Daten des Kanals 9 als sogenannte Rückstreuung auf die Abstrahlung des Kanals 13 aufmoduliert sind. Dies wird auch als Belastungsmodulation bezeichnet.

Die Funktionsweise eines beispielhaften Identsystems gemäß dem in Figur 6 dargestellten Prinzip kann wie folgt zusammengefaßt werden. Vom Schreib- und Lesegerät 1 wird einen gerichteten Lichtkegel 7 ausgesendet. Der Datenträger 3a empfängt den Lichtstrahl 7 mit der Solarzelle 33 und speist die internen, elektronischen Bauelemente. Der Datenträger 3a ist somit aktiviert. Das Schreib- und Lesegerät 1 sendet daraufhin ein Trägersignal 13 aus. Der Datenträger 3a empfängt das Trägersignal und moduliert beispielsweise eine Rückstreuung auf. Diese wird wiederum vom Schreib- und Lesegerät 1 zum Zwecke einer Identifikation des jeweiligen Datenträgers 3a ausgewertet. Zur Rückstreuung wird die Antenne 25 des Datenträgers 3a im Takt der zu übertragenden Daten elektrisch belastet. Das Schreib- und Lesegerät 1 erkennt den Datenträger 3a und beginnt seinerseits mit der Datenübertragung durch Abstrahlung einer modulierten Hochfrequenz 13. Der Datenträger 3a kann den Beginn der Datenübertragung erfassen, z.B. durch Auswertung des Hochfrequenzsignals, durch Auswertung eines Zeitfensters, oder einer Kombination aus beiden Maßnahmen. Der Datenträger 3a demoduliert die hochfrequenten Signale und führt Datenverarbeitungen durch. Diese kann z.B. Schreibzugriffe auf die interne Datenspeicher- und Verarbeitungseinheit, oder den Beginn einer eigenen hochfrequenten Datenabstrahlung beinhalten. Zur Abstrahlung eigener Daten wartet der Datenträger 3a, bis vom Schreib- und Lesegerät 1 wieder ein unmodulierter Träger 13 empfangen wird. Dann wird die Antenne 25 des Datenträger 3a im Takt der jeweils zu übertragenden Daten belastet.

Figur 7 zeigt das Prinzipschaltbild für eine erste beispielhafte Ausführung eines Identsystems gemäß dem Blockschaltbild von Figur 4. Diese unterscheidet sich von dem Beispiel der Figur 6 darin, daß zur Datenübertragung von der ersten Datenverarbeitungseinheit 1 zur zweiten Datenverarbeitungseinheit 3a kein hochfrequenter, sondern ebenfalls ein optoelektronischer Kanal 11 vorhanden ist. Die fünften, zur Datenabstrahlung dienenden Mittel 26 auf der Seite der ersten Datenverarbeitungseinheit 1 und die sechsten, zum Datenempfang dienenden Mittel 40 auf der Seite der zweiten Datenverarbeitungseinheit 3a sind somit nicht unter Verwendung von hochfrequenztechnischen, sondern von optoelektronischen Bauelementen ausgeführt. Besonders geeignet ist Infrarotstrahlung als Medium für den Kanal 11. Die fünften Mittel 26 weisen somit vorteilhaft eine optoelektronische Sendeeinrichtung 35 auf, welche die abzustrahlenden Daten von der Verarbeitungseinheit 15 entgegennimmt, konvertiert und einem optoelektronischen Abstrahlungselement 37 zuführt. Dieses kann in Form von einer oder mehrerer Infrarot Leuchtdioden oder Infrarot Laserdioden ausgeführt sein. Die Ausführung von Figur 7 hat den Vorteil, daß eine besonders sichere Vereinzelung einer zweiten Datenverarbeitungseinheit dadurch erfolgen kann, daß sowohl der optoelektronische Kanal zur Energieübertragung als auch der optoelektronische Kanal zur Datenübertragung fokussiert ausgeführt sind.

Auf der Seite des Datenträgers 3a weisen die sechsten Mittel 40 zum Datenempfang photoelektrisches Empfangselement 41 auf, welches vorteilhaft in Form einer Photodiode 41 ausgeführt sein kann. Dieser ist eine Verstärker- und Dekodiereinrichtung 39 nachgeschaltet. Vorteilhaft wird, wie im Beispiel der Figur 6, auch bei der Schaltung von Figur 7 sichtbares Licht zur Energieübertragung auf dem Kanal 7 und hochfrequente Abstrahlung auf dem zur Datenübertragung vom Datenträger 3a zum Schreib- und Lesegerät 1 dienenden Kanal 9 eingesetzt.

Figur 8 zeigt schließlich das Prinzipschaltbild für eine zweite beispielhafte Ausführung eines Identsystems gemäß dem Blockschaltbild von Figur 4. Dabei sind im Vergleich zur Ausführung von Figur 6 der Kanal 7 zur kabellosen Energieübertragung und der Kanal 11 zur kabellosen Datenübertragung von ersten zur zweiten Datenverarbeitungsvorrichtung in Form eines zweiten, optoelektronischen Kanalbündels 47 zur gleichzeitigen Übertragung von Energie und Daten ausgeführt. Vorteilhaft können dabei die Daten auf den energiereichen Lichtstrahl aufmoduliert sein. Die optoelektronische Sendeeinrichtung 35 der fünften Mittel 26 prägt somit die zu übertragenden Daten direkt in die Versorgungsspannung oder den Versorgungsstrom für Lichtquelle 23 ein. Auf der Seite der empfangenden zweiten Datenverarbeitungsvorrichtung 3a können die sechsten Mittel 40 zum kabellosen Datenempfang in der gleichen Weise wie im Beispiel der Figur 7 ausgeführt sein.

## Patentansprüche

1. Identsystem zur Übertragung, Verarbeitung und Speicherung von Daten, mit
a) mindestens einer ersten Datenverarbeitungsvorrichtung (1), insbesondere einem Schreib- und Lesegerät, welche zumindest enthält
i) erste Mittel (22) zur kabellosen Abstrahlung von Energie, und
ii) zweite Mittel (24) zum kabellosen Empfang von Daten, und mit
b) mindestens einer zweiten Datenverarbeitungsvorrichtung (3a), insbesondere einem mobilen Datenträger, welche zumindest enthält
i) dritte Mittel (33) zur Umwandlung der von den ersten Mitteln (22) der ersten Datenverarbeitungsvorrichtung (1) kabellos abgestrahlten Energie in elektrische Versorgungsenergie (34), und
ii) vierte Mittel (42) zur kabellosen Abstrahlung von Daten an die zweiten Mittel (33) der ersten Datenverarbeitungsvorrichtung (1),
**dadurch gekennzeichnet,** daß
c) die ersten Mittel (22) der ersten Datenverarbeitungsvorrichtung (1) und die dritten Mittel (33) der zweiten Datenverarbeitungsvorrichtung (3a) so ausgebildet sind, daß ein optoelektronischer Kanal (7) zur kabellosen Energieübertragung vorliegt, und
d) die vierten Mittel (42) der zweiten Datenverarbeitungsvorrichtung (3a) und die zweiten Mittel (24) der ersten Datenverarbeitungsvorrichtung (1) so ausgebildet sind, daß ein erster hochfrequenter, elektromagnetischer Kanal (9) zur kabellosen Datenübertragung von der zweiten (3a) zur ersten Datenverarbeitungsvorrichtung (1) vorliegt (Fig.1).

2. Identsystem nach Anspruch 1, wobei
a) die erste Datenverarbeitungsvorrichtung (1) ferner enthält fünfte Mittel (26) zur kabellosen Abstrahlung von Daten, und
b) die zweite Datenverarbeitungsvorrichtung (3a) ferner enthält sechste Mittel (40) zum kabellosen Empfang von Daten von den fünften Mitteln der ersten Datenverarbeitungsvorrichtung (1) (Fig.3,4).

3. Identsystem nach Anspruch 2, wobei die fünften Mittel (26) der ersten Datenverarbeitungsvorrichtung (1) und die sechsten Mittel (40) der zweiten Datenverarbeitungsvorrichtung (3a) so ausgebildet sind, daß ein zweiter hochfrequenter, elektromagnetischer Kanal (13) zur kabellosen Datenübertragung von der ersten (1) zur zweiten Datenverarbeitungsvorrichtung (3a) vorliegt (Fig.3).

4. Identsystem nach Anspruch 1 und 3, wobei sowohl die zweiten (24) und fünften Mittel (26) der ersten Datenverarbeitungsvorrichtung (1), als auch die vierten (42) und sechsten Mittel (40) der zweiten Datenverarbeitungsvorrichtung (3a) so ausgebildet sind, daß der erste (9) und der zweite hochfrequente, elektromagnetische Kanal (13) ein erstes, hochfrequentes, elektromagnetisches Kanalbündel (8) bilden (Fig.3).

5. Identsystem nach Anspruch 4, wobei im ersten, hochfrequenten, elektromagnetischen Kanalbündel (8) der erste hochfrequente, elektromagnetische Kanal (9) durch eine hochfrequente elektromagnetische Abstrahlung und der zweite hochfrequente, elektromagnetische Kanal (13) durch eine auf die hochfrequente elektromagnetische Abstrahlung aufmodulierte elektromagnetische Rückstreuung gebildet wird (Fig.3).

6. Identsystem nach Anspruch 2, wobei die fünften Mittel (26) der ersten Datenverarbeitungsvorrichtung (1) und die sechsten Mittel (40) der zweiten Datenverarbeitungsvorrichtung (3a) so ausgebildet sind, daß ein optoelektronischer Kanal (11) zur kabellosen Datenübertragung von der ersten (1) zur zweiten Datenverarbeitungsvorrichtung (3a) vorliegt (Fig.4).

7. Identsystem nach Anspruch 1 und 6, wobei sowohl die ersten (22) und fünften Mittel (26) der ersten Datenverarbeitungsvorrichtung (1), als auch die dritten (33) und sechsten Mittel (40) der zweiten Datenverarbeitungsvorrichtung (3a) so ausgebildet sind, daß der optoelektronische Kanal (7) zur kabellosen Energieübertragung und der optoelektronische Kanal (11) zur kabellosen Datenübertragung von der ersten (1) zur zweiten Datenverarbeitungsvorrichtung (3a) ein zweites, optoelektronisches Kanalbündel (47) bilden (Fig.4).

8. Identsystem nach Anspruch 7, wobei im zweiten, optoelektronischen Kanalbündel (47) der optoelektronische Kanal (7) zur kabellosen Energieübertragung durch eine gerichtete optoelektronische Abstrahlung und der optoelektronische Kanal (11) zur kabellosen Datenübertragung von der ersten (1) zur zweiten Datenverarbeitungsvorrichtung (3a) durch eine Aufmodulation auf die zur kabellosen Energieübertragung dienende optoelektronische Abstrahlung gebildet wird (Fig.4).

9. Identsystem nach Anspruch 1, wobei die ersten Mittel (22) zur kabellosen Abstrahlung von Energie eine energiereiche Lichtquelle (23) aufweisen.

10. Identsystem nach Anspruch 1, wobei die zweiten Mittel (24) zum kabellosen Empfang von Daten eine erste Hochfrequenzantenne (21) aufweisen.

11. Identsystem nach Anspruch 1, wobei die dritten Mittel (33) zur Umwandlung der von den ersten Mitteln (22) der ersten Datenverarbeitungsvorrichtung (1) kabellos abgestrahlten Energie in elektrische Energie (34) eine Solarzelle aufweisen.

12. Identsystem nach Anspruch 1, wobei die vierten Mittel (42) zur kabellosen Absendung von Daten an die zweiten Mittel (24) der ersten Datenverarbeitungsvorrichtung (1) eine zweite Hochfrequenzantenne (25) aufweisen.

13. Identsystem nach Anspruch 3, wobei die fünften Mittel (26) in der ersten Datenverarbeitungsvorrichtung (1) zur kabellosen Abstrahlung von Daten eine erste Hochfrequenzantenne (21) aufweisen (Fig.6).

14. Identsystem nach Anspruch 3, wobei die sechsten Mittel (40) in der zweiten Datenverarbeitungsvorrichtung (1) zum kabellosen Empfang von Daten eine zweite Hochfrequenzantenne (21) aufweisen (Fig.6).

15. Identsystem nach Anspruch 6, wobei die fünften Mittel (26) in der ersten Datenverarbeitungsvorrichtung (1) ein optoelektronisches Abstrahlungselement (37) zur kabellosen Abstrahlung von Daten aufweisen, insbesondere eine oder mehrere Infrarot-Leuchtdioden oder Infrarot-Laserdioden (Fig.7).

16. Identsystem nach Anspruch 6, wobei die sechsten Mittel (40) in der zweiten Datenverarbeitungsvorrichtung (1) ein photoelektrisches Empfangselement (41) zum kabellosen Empfang von Daten aufweisen, insbesondere eine oder mehrere Photodioden (Fig.7).
